(19) Europäisches Patentamt
European Patent Office
Office européen des brevets

(11) EP 0 720 985 B1

(12) **EUROPÄISCHE PATENTSCHRIFT**

(45) Veröffentlichungstag und Bekanntmachung des Hinweises auf die Patenterteilung:
**19.07.2000 Patentblatt 2000/29**

(51) Int Cl.[7]: **C07F 9/30**, C07F 9/48, C07F 9/38, C08G 77/48, C08G 77/395

(21) Anmeldenummer: **95119828.2**

(22) Anmeldetag: **15.12.1995**

(54) **Phosphorhaltige Organosiliciumverbindungen**

Organo silicon compounds containing phosphorus

Composés organosiliciés contenant du phosphore

(84) Benannte Vertragsstaaten:
**AT BE DE FR GB IT NL**

(30) Priorität: **05.01.1995 DE 19500253**

(43) Veröffentlichungstag der Anmeldung:
**10.07.1996 Patentblatt 1996/28**

(73) Patentinhaber: **Wacker-Chemie GmbH**
**81737 München (DE)**

(72) Erfinder:
- **Dauth, Jochen, Dr.**
  **D-84489 Burghausen (DE)**
- **Mayer, Hans, Dr.**
  **D-84489 Burghausen (DE)**
- **Deubzer, Bernward, Dr.**
  **D-84489 Burghausen (DE)**
- **Gratzl, Petra**
  **D-84577 Tüssling (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**DE-A- 2 219 983**
**GB-A- 836 241**
**GB-A- 885 466**
**US-A- 2 889 349**
**US-A- 2 963 503**
**US-A- 3 122 581**
**US-A- 3 912 774**

- **JOURNAL OF ORGANIC CHEMISTRY, Bd. 25, Nr. 7, - 1960 EASTON US, Seiten 1191-1194, GARRETT H. BARNES, JR. 'Synthesis and hydrolytic stability of some organosilicon phosphonate esters'**
- **JOURNAL OF POLYMER SCIENCE, POLYMER CHEMISTRY EDITION, Bd. 25, Nr. 7, 1987 NEW YORK US, Seiten 1967-1978, CLIFFORD D. JUENGST 'Preparation and properties of dimethyl phosphonomethyl methylsiloxane dimethylsiloxane copolymers'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 720 985 B1

Printed by Jouve, 75001 PARIS (FR)

**Beschreibung**

Phosphorhaltige Silane und Organo(poly)siloxane mit fünfwertigem Phosphor sind bereits bekannt. Beispielsweise wird in US-A 2,963,503, J.Org.Chem, Bd.25, Nr.7 (1960) Seiten 1191-1194 und US-A 3,122,581 eine Reihe von phosphorhaltigen Silanen und Organo(poly)siloxanen, ausgehend von Estern der Phosphon- oder Phosphinsäure, beschrieben. Die durch Radikale initiierte Hydrophosphorylierungsreaktion führt zu Phosphonsäureesterreste und Phosphinsäureesterreste enthaltenden Organosiliciumverbindungen. In GB-A 885 466, DE-B 22 19 983 und US-A 3,912,774 sind verschiedene Verfahren zur Herstellung von phosphorhaltigen Silanen und Organo(poly)siloxanen beschrieben.

Es bestand die Aufgabe, phosphorhaltige Organosiliciumverbindungen bereitzustellen, die in einem einfachen Verfahren unter Verwendung leicht zugänglicher Ausgangsstoffe hergestellt werden können, die hydrophil bis wasserlöslich sind und deren Hydrophilie bzw. Wasserlöslichkeit durch Modifizierung der phosphorhaltigen Organosiliciumverbindungen gezielt gesteuert werden kann. Die Aufgabe wird durch die Erfindung gelöst.

Gegenstand der Erfindung sind phosphorhaltige Organosiliciumverbindungen mit Einheiten der Formel

$$\left[ M_fO-\underset{R^1}{\underset{|}{\overset{O}{\overset{\|}{P}}}}-Z \right]_a R_bSiX_cO_{\frac{4-(a+b+c)}{2}} \quad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
$R^1$ ein Wasserstoffatom, einen einwertigen Kohlenwasserstoffrest mit 1 bis 18 Kohlenstoffatom(en) je Rest oder einen Rest der Formel

$$-Z-SiR_bX_cO_{\frac{4-(a+b+c)}{2}}$$

bedeutet,

Z einen zweiwertigen,
Kohlenwasserstoffrest mit 2 bis 18 Kohlenstoffatomen je Rest bedeutet,
M ein Alkali- oder Erdalkalimetall ist,
X gleich oder verschieden ist, ein Halogenatom oder ein Rest der Formel $-OR^2$ ist,

wobei $R^2$ einen Alkylrest mit 1 bis 8 Kohlenstoffatom(en) je Rest, der durch ein Ethersauerstoffatom substituiert sein kann, bedeutet,

a 0, 1, 2, 3 oder 4,
b 0, 1, 2 oder 3,
c 0, 1, 2 oder 3,

die Summe $a+b+c \leq 4$ und
f 0,5 oder 1 ist.

Gegenstand der Erfindung ist ein Verfahren zur Herstellung von phosphorhaltigen Organosiliciumverbindungen, dadurch gekennzeichnet, daß aliphatische Mehrfachbindungen aufweisende Organosiliciumverbindungen (1) mit Einheiten der Formel

$$B_aR_bSiX_cO_{\frac{4-(a+b+c)}{2}} \quad (II),$$

wobei B einen einwertigen, aliphatische Mehrfachbindungen aufweisenden, Kohlenwasserstoffrest mit 2 bis 18 Kohlenstoffatomen je Rest bedeutet,
R, X, a, b und c die oben dafür angegebene Bedeutung haben, mit Alkali- oder Erdalkalisalzen der Phosphin- oder Phosphonsäure (2) der Formel

$$M_fO-\overset{\overset{\displaystyle O}{\|}}{\underset{\underset{\displaystyle R^3}{|}}{P}}-H \quad (III)\ ,$$

wobei $R^3$ ein Wasserstoffatom, eine Hydroxylgruppe oder einen einwertigen Kohlenwasserstoffrest mit 1 bis 18 Kohlenstoffatom(en) je Rest bedeutet und
M ein Alkali- oder Erdalkalimetall ist,
in Gegenwart von freie Radikale bildenden Katalysatoren (3) umgesetzt werden.

Die erfindungsgemäßen Organosiliciumverbindungen besitzen vorzugsweise ein Molekulargewicht von 100 bis 1000000 g/mol bevorzugt 300 bis 90000 g/mol und sind vorzugsweise Feststoffe, bzw. besitzen eine Viskosität von 100 bis 100000 $mm^2 \cdot s^{-1}$ bei 25°C, bevorzugt 1000 bis 5000 $mm^2 \cdot s^{-1}$ bei 25°C.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert. Pentylrest; Hexylreste, wie der n-Hexylrest; Heptylreste, wie der n-Heptylrest; Octylreste, wie der n- Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylreste und Methylcyclohexylreste; Arylreste, wie der Phenyl-, Naphthyl-und Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest der 2,2,2,2',2',2'-Hexafluorisopropylrest, der Heptafluorisopropylrest und Halogenarylreste, wie der o-, m-und p-Chlorphenylrest.

Beispiele für Kohlenwasserstoffreste R gelten im vollen Umfang für Kohlenwasserstoffreste $R^1$. Bevorzugt ist $R^1$ aber ein Wasserstoffatom, eine Hydroxylgruppe, oder ein Rest der Formel

$$-Z-SiR_bX_cO_{\frac{4-(a+b+c)}{2}}$$

wobei Z, X, R, a, b und c die oben dafür angegebene Bedeutung haben.

Beispiele für zweiwertige Kohlenwasserstoffreste Z sind lineare und verzweigte Alkylenreste, wie Reste der Formel $-CH_2CH_2-$, $-CH_2CH_2CH_2-$,

$$-CH_2\underset{\underset{\displaystyle CH_3}{|}}{CH}-,$$

und - $(CH_2)_6$-, und Cycloalkylenreste, wie der Rest der Formel $-C_6H_{10}-$. Bevorzugt ist der Rest der Formel $-CH_2CH_2-$.

Beispiele für Alkali- oder Erdalkalimetalle M sind Lithium, Natrium, Kalium, Rubidium, Cäsium, Magnesium, Calcium, Strontium und Barium. Bevorzugt sind Alkalimetalle und f ist daher bevorzugt 1. Besonders bevorzugt ist Natrium und Kalium.

Beispiele für Halogenatome X sind das Chlor- und das Bromatom.

Beispiele für Alkylreste $R^2$ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste $R^2$, die durch ein Ethersauerstoffatom substituiert sind, sind der Methoxyethyl- und Ethoxyethylrest.

Beispiele für aliphatische Mehrfachbindungen aufweisende Kohlenwasserstoffreste B in der Formel (II) sind Alkenylreste, wie der Vinyl-, Allyl-, 1-Butenyl-, 1-Pentenyl-, 1-Hexenyl-, Divinylcyclohexyl-, Norbornenyl- und Cycloheptadienylrest. Bevorzugt ist der Vinylrest.

Beispiele für Kohlenwasserstoffreste $R^1$ gelten im vollen Umfang für Kohlenwasserstoffreste $R^3$. Bevorzugt ist $R^3$ ein Wasserstoffatom oder eine Hydroxylgruppe.

Vorzugsweise sind die erfindungsgemäßen phosphorhaltigen Organosiliciumverbindungen phosphorhaltige Silane oder phosphorhaltige Organo(poly)siloxane.

In Formel (I) und (II) ist vorzugsweise

a durchschnittlich 0,01 bis 2,0,

b durchschnittlich 0,0 bis 3,0,
c durchschnittlich 0,0 bis 3,0

und vorzugsweise die Summe a+b+c durchschnittlich 0,1 bis 4,0.

Beispiele für phosphorhaltige Organosiliciumverbindungen sind solche, die Einheiten der Formeln

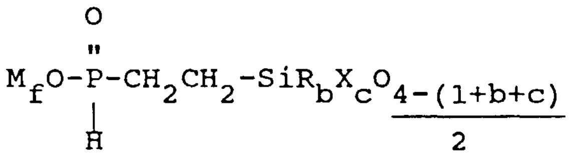 (IV)

oder

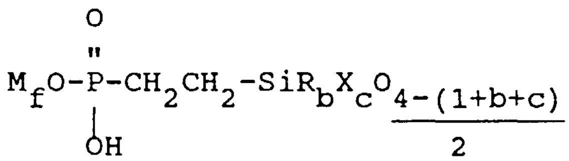 (V)

oder

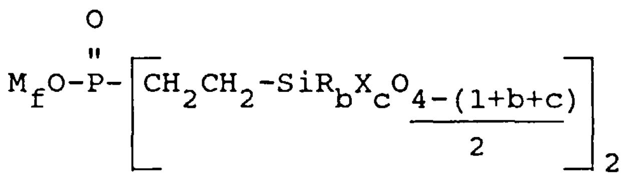 (VI)

enthalten, wobei M, R, X, b, f und c die oben dafür angegebene Bedeutung haben, M bevorzugt Natrium, R bevorzugt ein Methylrest, b bevorzugt 2, c bevorzugt 0 und f bevorzugt 1 ist.

Beispiele für aliphatische Mehrfachbindungen aufweisende Organosiliciumverbindungen (1) sind Organo(poly)siloxane aus Einheiten der Formeln

$R_2SiO$ und $BR_2SiO_{1/2}$; $R_3SiO_{1/2}$ und $BRSiO$; $R_3SiO_{1/2}$, $R_2SiO$ und $BRSiO$
$SiO_2$ und $BR_2SiO_{1/2}$; $SiO_2$, $R_2SiO$ und $BR_2SiO_{1/2}$;
$RSiO_{3/2}$, $R_2SiO$ und $BR_2SiO_{1/2}$; $RSiO_{3/2}$, $BRSiO$, $R_3SiO_{1/2}$;
$BSiO_{3/2}$ und $R_3SiO_{1/2}$;

wobei R und B die oben dafür angegebene Bedeutung haben.

Beispiele für Salze (2), die bei dem erfindungsgemäßen verfahren eingesetzt werden, sind solche der Formel

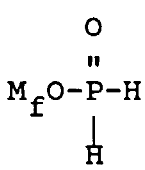 und 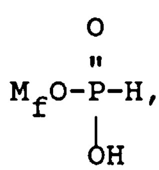,

wobei M die oben dafür angegebene Bedeutung hat, bevorzugt Natrium und Kalium, besonders bevorzugt Natrium ist.

Bei dem erfindungsgemäßen Verfahren werden vorzugsweise pro mol P-gebundener Wasserstoff im Salz (2) 0.1 - 10 mol, bevorzugt 0.5 - 5 mol und besonders bevorzugt 0.5 - 2 mol Si-gebundene, aliphatische Mehrfachbindungen

aufweisende Gruppen in Organosiliciumverbindung (1) eingesetzt.

Als Radikale bildende Katalysatoren (3) werden bei dem erfindungsgemäßen Verfahren vorzugsweise Peroxidverbindungen und Azoverbindungen verwendet.

Beispiele für Peroxidverbindungen sind Ditertiärbutylperoxid, Dibenzoylperoxid, Diacetylperoxid, Dicumylperoxid, Tertiärbutylperacetat und Tertiärbutylperbenzoat. Beispiele für Azoverbindungen sind Azoisobutyronitril, 4,4'-Azobis-(4-cyanopentansäure), 2,2'-Azobis-(2-cyanopropanol) und Phenylazoethan-1,1-dinitril.

Radikale bildende Katalysatoren (3) werden bei dem erfindungsgemäßen Verfahren vorzugsweise in Mengen von 0.1 bis 10 Gew.-%, bevorzugt in Mengen von 2 bis 8 Gew.-%, bezogen auf das Gesamtgewicht von Organosiliciumverbindung (1) und Salz (2), eingesetzt.

Das erfindungsgemäße Verfahren zur Herstellung phosphorhaltiger Organosiliciumverbindungen wird vorzugsweise in Gegenwart von organischen Lösungsmitteln, wie Methanol, Ethanol, Isopropanol, n-Butanol, Aceton, Tetrahydrofuran, Dimethylformamid, Dimethylsulfoxid, N-Methylpyrrolidon, Essigester und Dimethoxyethan oder in Gegenwart eines Gemisches aus Wasser und dem organischen Lösungsmittel durchgeführt.

Das erfindungsgemäße Verfahren wird vorzugsweise beim Druck der umgebenden Atmosphäre, also etwa bei 1020 hPa (abs.) durchgeführt, es kann aber auch bei höheren oder niedrigeren Drucken durchgeführt werden. Ferner wird das erfindungsgemäße Verfahren vorzugsweise bei einer Temperatur von 50°C bis 150°C, bevorzugt 80°C bis 110°C durchgeführt.

Von den nach dem erfindungsgemäßen Verfahren hergestellten phosphorhaltigen Organosiliciumverbindungen wird vorzugsweise gegegebenenfalls mitverwendetes inertes organisches Lösungsmittel oder Wasser destillativ entfernt.

Das erfindungsgemäße Verfahren kann absatzweise, halbkontinuierlich oder vollkontinuierlich durchgeführt werden.

Die nach dem erfindungsgemäßen Verfahren erhaltenen phosphorhaltigen Organosiliciumverbindungen können mit Säuren (4), die einen niedrigeren pK-Wert als die Phosphin-bzw. Phosphonsäure besitzen nach folgender Gleichung umgesetzt werden

$$(I) + aHY \dashrightarrow \left[ \begin{array}{c} O \\ \| \\ HO-P-Z \\ | \\ R^1 \end{array} \right]_a R_bSiX_cO_{\frac{4-(a+b+c)}{2}} + aM_fY$$

wobei R, $R^1$, X, Z, M, a, b, f und c die oben dafür angegebene Bedeutung haben.

Beispiele für Säuren HY sind solche der Formel
$H_2SO_4$, HCl, $HClO_4$, $CF_3COOH$, $H_3PO_4$ und $CF_3SO_3H$.

Die erfindungsgemäßen phosphorhaltigen Organosiliciumverbindungen mit niederem Molekulargewicht sind zumeist Feststoffe und gut in Wasser löslich. Durch die Zugabe von Säuren, die einen niedrigeren pK-Wert als die Phosphin- bzw. Phosphonsäure besitzen, fällt die phosphorhaltige Organosiliciumverbindung mit dem $HOP(O)R^1Z$-Rest aus und kann damit auf einfache Weise rein erhalten werden.

Die erfindungsgemäßen phosphorhaltigen Organosiliciumverbindungen mit höheren Molekulargewichten sind zumeist Flüssigkeiten und zumeist selbstemulgierend, d.h., durch Zugabe von Wasser und durch schnelles Rühren bildet sich eine Emulsion - der Einsatz eines Emulgiermittels entfällt. Diese Emulsion wird durch Zugabe einer Säure, die einen niedrigeren pK-Wert als die Phosphin-bzw. Phosphonsäure besitzt, gebrochen und die phophorhaltige Organosiliciumverbindung mit dem $HOP(O)R^1Z$-Rest kann damit auf einfache Weise erhalten werden.

Durch diese einfache Modifizierung der erfindungsgemäßen phosphorhaltigen Organosiliciumverbindung kann die Hydrophilie bzw. Wasserlöslichkeit je nach Bedarf gezielt geändert werden. Diese Eigenschaft ist beispielsweise bei der Anwendung im Textilbereich vorteilhaft.

Weiterhin können die erfindungsgemäßen, phosphorhaltigen Organosiliciumverbindungen, die überschüssige Si-gebundene B-Gruppen, also Gruppen mit aliphatischer Mehrfachbindung aufweisen, im Zuge einer Hydrosilylierungsreaktion mit Organosiliciumverbindungen (5), die je Molekül mindestens ein Si-gebundenes Wasserstoffatom aufweisen, der Formel

$$H_dR_eSiO_{\frac{4-(d+e)}{2}} \quad (VII),$$

worin R die oben dafür angegebene Bedeutung hat,

d 0 oder 1, durchschnittlich 0,01 bis 1,0,
e 0, 1, 2 oder 3 durchschnittlich 0,0 bis 3,0

und die Summe von d + e nicht größer als 3 ist,
in Gegenwart von sogenannten Hydrosilylierungskatalysatoren, also solchen Katalysatoren (6), die die Anlagerung von Si-gebundenen Wasserstoff an aliphatische Mehrfachbindung fördern, umgesetzt werden.

Die Organosiliciumverbindungen (5) mit mindestens einem Si-gebundenen Wasserstoffatom je Molekül enthalten vorzugsweise mindestens 0,04 Gew.-%, bevorzugt 0,1 bis 1,6 Gew.-% Si-gebundenen Wasserstoff und ihre durchschnittliche Viskosität beträgt vorzugsweise 5 bis 20 000 $mm^2 \cdot s^{-1}$ bei 25°C, bevorzugt 10 bis 10 000 $mm^2 \cdot s^{-1}$ bei 25°C, besonders bevorzugt 10 bis 1 000 $mm^2 \cdot s^{-1}$ bei 25°C.

Bevorzugt werden als Organosiliciumverbindungen (5) mit mindestens einem Si-gebundenen Wasserstoffatom je Molekül Organopolysiloxane der Formel

$$H_hR_{3-h}SiO(SiR_2O)_o(SiRHO)_pSiR_{3-h}H_h \quad (VIII)$$

wobei R die oben dafür angegebene Bedeutung hat,

h 0 oder 1,
o 0 oder eine ganze Zahl von 1 bis 1500 und
p 0 oder eine ganze Zahl von 1 bis 100 ist, verwendet.

Als die Anlagerung von Si-gebundenem Wasserstoff an aliphatische Mehrfachbindung fördernde Katalysatoren (6) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe Platinmetalle. Beispiele für solche Katalysatoren sind metallisches und feinverteiltes Platin, das sich auf Trägern wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ester-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetra- methyldi-siloxankomplexe mit oder ohne Gehalt an nachweisbarem anorganisch gebundenem Halogen, Bis(gamma-picolin)-platindichlorid, Trimethylendipyridinplatindichlorid, Dicyclopentadienplatinchlorid, Dimethylsulfoxydethylenplatin-(II)-dichlorid, Cyclooctadien-Platindichlorid, Norbornadien-Platindichlorid, Gammapicolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 42 92 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (6) wird vorzugsweise in Mengen von 2 bis 200 Gew.-ppm (Gewichtsteilen je Million Gewichtsteilen), bevorzugt in Mengen von 5 bis 50 Gew.-ppm, jeweils berechnet als elementares Platin und bezogen auf das Geamtgewicht von phosphorhaltiger Organosiliciumverbindung und Organosiliciumverbindung mit mindestens einem Si-gebundenen Wasserstoffatom je Molekül, eingesetzt.

Die Hydrosilylierungreaktion wird vorzugsweise beim Druck der umgebenden Atmosphäre, also etwa bei 1020 hPa (abs.) durchgeführt, es kann aber auch bei höheren oder niedrigeren Drücken durchgeführt werden. Ferner wird die Hydrosilylierungsreaktion vorzugsweise bei einer Temperatur von 80°C bis 150°C, bevorzugt 110°C bis 125°C, durchgeführt.

Bei der Hydrosilylierungsreaktion können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Isopropanol, Xylol, Isophoron, Octanisomere und Butylacetat. Nach der Hydrosilylierungsreaktion wird das gegebenenfalls mitverwendete inerte organische Lösungsmittel destillativ entfernt.

Weiterhin können die nach dem erfindungsgemäßen Verfahren erhaltenen phosphorhaltigen Organosiliciumverbindungen mit Organopolysiloxanen (7) ausgewählt aus der Gruppe bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der Formel

$$R_3SiO(SiR_2O)_rSiR_3$$

wobei R die oben dafür angegebene Bedeutung hat und r 0 oder eine ganze Zahl im Wert von 1 bis 1500 ist, als lineare, endständige Hydroxylgruppen aufweisende Organopolysiloxane solche der Formel

$$HO(SiR_2O)_sH$$

wobei R die oben dafür angegebene Bedeutung hat und s eine ganze Zahl im Wert von 1 bis 1500 ist,
als cyclische Organopolysiloxane solche der Formel

$$(R_2SiO)_t$$

wobei R die oben dafür angegebene Bedeutung hat und
t eine ganze Zahl von 3 bis 12 ist,
und als Mischpolymerisate solche aus Einheiten der Formel

$$R_2SiO \text{ und } RSiO_{3/2},$$

wobei R die oben dafür angegebene Bedeutung hat, eingesetzt.

Die Mengenverhältnisse der bei der gegebenenfalls durchgeführten Equilibrierung eingesetzten Organopolysiloxane und Phosphorgruppen aufweisenden Organopolysiloxane werden lediglich durch den gewünschten Anteil der Phosphorgruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise basische Katalysatoren, welche die Equilibrierung fördern, eingesetzt. Beispiele für solche Katalysatoren sind Alkalihydroxide, insbesondere Kalium- und Cäsiumhydroxid, Alkalialkoholate, quaternäre Ammoniumhydroxide, wie Tetramethylammoniumhydroxid, Tetrabutylammoniumhydroxid, Benzyltrimethylammoniumhydroxid, Benzyltriethylammoniumhydroxid, Benzyltrimethylammoniumbutylat, β-Hydroxyethyltrimethylammonium-2-ethylhexoat, quaternäre Phosphoniumhydroxide, wie Tetra-n-butylphosphoniumhydroxid und Tri-n-butyl-3-[tris-(trimethylsiloxy)silyl]-n-propyl-phosphoniumhydroxid, Alkalisiloxanolate und Ammoniumorganosiloxanolate, wie Benzyltrimethylammoniumethylsiloxanolat. Basische Katalysatoren werden vorzugsweise in Mengen von 200 bis 5000 Gew.-ppm, bevorzugt 500 bis 1500 Gew.-ppm, jeweils bezogen auf das Gesamtgewicht der eingesetzten Organosiliciumverbindungen, verwendet. Die Verwendung saurer Equilibrierungskatalysatoren ist zwar möglich, jedoch nicht bevorzugt. Für die Equilibrierung der korrespondierenden freien Säurederivate, d.h. der phosphorhaltigen Organopolysiloxane mit dem $HOP(O)R^1Z$-Rest, sind saure Katalysatoren bevorzugt. Beispiele für saure Katalysatoren sind Schwefelsäure, Phosphorsäure, Phosphornitridchloride und unter den Reaktionsbedingungen fest, saure Katalysatoren, wie säureaktivierte Bleicherde, saure Zeolithe, sulfonierte Kohle und sulfoniertes Styrol-Divinylbenzol-Mischpolymerisat.

Die gegebenenfalls durchgeführte Equilibrierung wird vorzugsweise bei 80°C bis 150°C und beim Druck der umgebenden Atmosphäre, also etwa bei 1020 hPa (abs.) durchgeführt. Falls erwünscht, können aber auch höhere oder niedrigere Drücke angewendet werden.

Das Equilibrieren wird vorzugsweise in 5 bis 20 Gew.-%, bezogen auf das Gesamtgewicht der jeweils eingesetzten Organosiliciumverbindungen, in mit Wasser mischbarem oder nicht mischbarem Lösungsmittel, wie Isopropanol oder Toluol, durchgeführt. Vor dem Aufarbeiten des bei dem Equilibrieren erhaltenen Gemisches kann der Katalysator unwirksam gemacht werden.

Die erfindungsgemäßen phosphorhaltigen Organosiliciumverbindungen eignen sich im besonderen zur Anwendung als Hydrophilmodifier, Flammschutzmittel, Antistatikum, Antibakterizid und zum Einbringen von polaren Gruppen in und an Substrate.

Beispiel 1:

18,64 g (0,1 mol) Divinyltetramethyldisiloxan und 7,5 g (0,163 mol) Ethanol werden unter Stickstoffatmosphäre auf 85°C unter Rückfluß erhitzt. Dazu tropft man langsam unter Rühren eine Lösung aus 10,6 g (0,1 mol) Natriumhypophosphit, 6,0 g (0,33 mol) Wasser und 1,0 g (0,0031 mol) 4,4'-Azobis-(4-cyanopentansäure) (10 Gew.-% in Wasser mit Natriumhydroxid auf pH 7 neutralisiert). Anschließend rührt man eine Stunde bei 85 °C. Die Lösung wird filtriert und im Hochvakuum bei 70 °C eingeengt. Die Trocknung erfolgt im Hochvakuum bei 100 °C über Phosphorpentoxid bis zur Gewichtskonstanz. Es werden 9,79 g (33,48 % d. Th.) eines weißen Feststoffes gewonnen. Es wird ein Polymer aus Einheiten der Formel

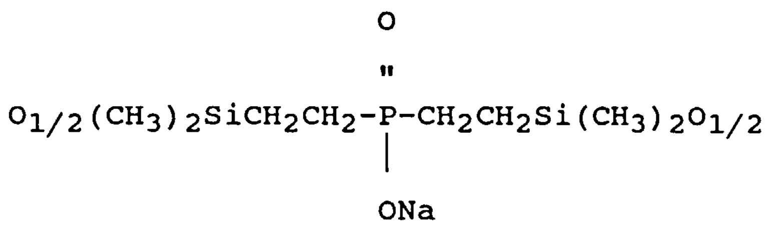

erhalten.

Beispiel 2:

186,4 g (1 mol) Divinyltetramethyldisiloxan und 75 g (1,63 mol) Ethanol werden unter Stickstoffatmosphäre auf 85 °C unter Rückfluß erhitzt. Dazu tropft man langsam unter Rühren eine Lösung aus 17,67 g (0,167 mol) Natriumhypophosphit, 10 g (0,56 mol) Wasser und 16 g (0,049 mol) 4,4'-Azobis-(4-cyanopentansäure) (10 Gew.-% in Wasser mit Natriumhydroxid auf pH 7 neutralisiert). Anschließend rührt man drei Stunden bei 80 °C. Die Lösung wird filtriert und im Hochvakuum bei 100 °C eingeengt. Die Trocknung erfolgt im Hochvakuum bei 100 °C über Phosphorpentoxid bis zur Gewichtskonstanz. Es werden 43,92 g (54,96 % d. Th.) eines weißen Feststoffes gewonnen, der in Wasser gut löslich ist. Es wird eine Verbindung der Formel

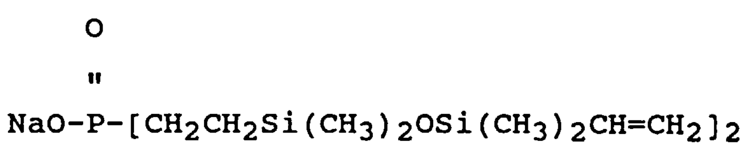

erhalten.

Beispiel 3:

18,64 g (0,1 mol) Divinyltetramethyldisiloxan und 7,5 g (0,163 mol) Ethanol werden unter Stickstoffatmosphäre auf 85°C unter Rückfluß erhitzt. Dazu tropft man langsam unter Rühren eine Lösung aus 21,2 g (0,2 mol) Natriumhypophosphit, 5,0 g (0,28 mol) Wasser und 1,0 g (0,0031 mol) 4,4'-Azobis-(4-cyanopentansäure) (10 Gew.-% in Wasser mit Natriumhydroxid auf pH 7 neutralisiert). Anschließend rührt man eine Stunde bei 85 °C. Die Lösung wird filtriert und im Hochvakuum bei 70 °C eingeengt. Die Trocknung erfolgt im Hochvakuum bei 100 °C über Phosphorpentoxid bis zur Gewichtskonstanz. Es werden 14,76 g (37,05 % d. Th.) eines weißen Feststoffes gewonnen. Es wird eine Verbindung der Formel

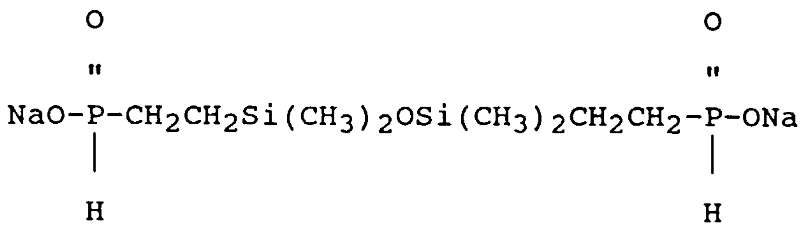

erhalten.

Beispiel 4:

12,86 Produkt aus Beispiel 2 werden mit 200 g (11,11 mol) Wasser und 150 g einer 10 Gew.-%igen wäßrigen Salzsäure versetzt und eine halbe Stunde bei Raumtemperatur gerührt. Danach wird die wäßrige Emulsion dreimal mit je 50 ml Diethylether versetzt, durchmischt und die organische Phase abgetrennt. Die vereinten Diethyletherphasen werden über Natriumsulfat getrocknet, filtriert und im Vakuum bei 40 °C bis zur Gewichtskonstanz eingeengt. Es werden 7,65 g (74,36 % d. Th.) einer klaren, farblosen Flüssigkeit gewonnen. Es wird eine Verbindung der Formel

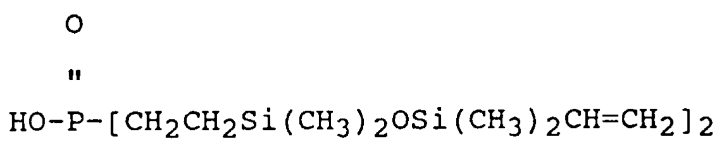

erhalten.

Beispiel 5:

9,76 g Produkt aus Beispiel 2 werden mit 80 ml (0,99 mol) Tetrahydrofuran und 28,85 µl eines Platinkatalysators in 1-Octen (5,63 Gew.-% Platin) versetzt, so daß die Gesamtmischung 50 Gew.-ppm Platin enthält, und auf 65 °C erwärmt. Anschließend werden 3,33 g eines α, ω-Dihydrogenpolydimethylsiloxanes der Viskosität 2,4 $mm^2 \cdot s^{-1}$ mit 0,3 Gew.-% Si-gebundenem Wasserstoff zudosiert. Die Lösung wird zwei Stunden bei 65 °C unter Rückfluß gerührt, wobei nach einer Stunde weitere 28,85 µl des oben beschriebenen Platinkatalysators zugesetzt werden. Nach der Filtration wird das Filtrat im Hochvakuum bei 80 °C bis zur Gewichtskonstanz eingeengt. Es werden 14,34 g (62,07 % d. Th.) eines transparenten, hochviskosen Öles gewonnen. Es wird ein Polymer aus Dimethylsiloxaneinheiten und Einheiten der Formel

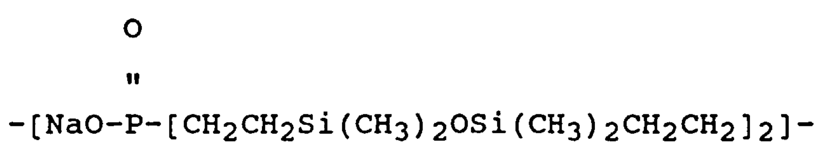

erhalten.

Beispiel 6:

12,2 g Produkt aus Beispiel 2 werden mit 60 ml (0,66 mol) n-Butanol und 30,63 µl eines Platinkatalysators in 1-Octen (5,63 Gew.-% Platin) versetzt, so daß die Gesamtmischung 50 Gew.-ppm Platin enthält, und auf 100 °C erwärmt. Anschließend werden 12,32 g (0,075 mol) Hydrogentriethoxysilan zudosiert. Die Lösung wird vier Stunden bei 100 °C gerührt, wobei nach zwei Stunden weitere 30,63 µl des oben beschriebenen Platinkatalysators zugesetzt

werden. Nach der Filtration wird das Filtrat im Hochvakuum bei 100 °C bis zur Gewichtskonstanz eingeengt. Es werden 15,65 g (76,70 % d. Th.) eines transparenten, viskosen Öles gewonnen. Es wird eine Verbindung der Formel

$$NaO-\overset{\overset{O}{\|}}{P}-[CH_2CH_2Si(CH_3)_2OSi(CH_3)_2CH_2CH_2Si(OC_2H_5)_3]_2$$

erhalten.

Beispiel 7:

35,46 eines $\alpha,\omega$-Divinylpolydimethylsiloxanes der Viskosität 16,7 $mm^2 \cdot s^{-1}$ bei Raumtemperatur mit 0,141 mol-Prozent Vinylgruppen, 15,6 g (0,26 mol) Isopropanol und 0,15 g (9,1 x $10^{-4}$ mol) Azoisobutyronitril werden bei 100 °C unter Stickstoff vorgelegt. Dazu tropft man 2,5 g (2,36 x $10^{-2}$ mol) Natriumhypophosphit, gelöst in 7,0 g (0,15 mol) Ethanol und 4,0 g (0,22 mol) Wasser. Nach einer Stunde Reaktionszeit werden nochmals 0,15 g (9,1 x $10^{-4}$ mol) Azoisobutyronitril in 15,6 g (0,26 mol) Isopropanol zudosiert und weitere zwei Stunden bei 100 °C gerührt. Die Lösung wird filtriert und dann im Hochvakuum bei 100 °C bis zur Gewichtskonstanz eingeengt. Es werden 33,27 g (92,34 % d. Th.) eines farblosen hochviskosen Produktes gewonnen, das bei Zugabe von Wasser unter schnellem Rühren eine Emulsion bildet, d.h. selbstemulgierend ist. Es wird ein Polymer aus Dimethylsiloxaneinheiten und Einheiten der Formel

$$-O_{1/2}(Me)_2SiCH_2CH_2-\underset{\underset{ONa}{|}}{\overset{\overset{O}{\|}}{P}}-CH_2CH_2Si(Me)_2O[Si(Me)_2O]_{15}Si(Me)_2O_{1/2}-$$

(Me = Methylgruppe)
erhalten.

Beispiel 8:

25,0 g (1,39 mol) Wasser, 75,0 g (1,67 mol) Ethanol, 53,0 g (0,5 mol) Natriumhypophosphit und 2,5 g (1,29 x $10^{-2}$ mol) tert.-Butylperbenzoat werden unter Stickstoff bei 80 °C unter Rückfluß vorgelegt. 93,0 g (0,5 mol) 1,3-Divinyltetramethyldisiloxan und 2,5 g (1,29 x $10^{-2}$ mol) tert.-Butylperbenzoat werden zuerst gemischt und dann langsam in die Vorlage getropft. Nach beendeter Zugabe wird vier Stunden bei 85 °C unter Rückfluß gekocht. Die Lösung wird filtriert und im Hochvakuum bei 80 °C bis zur Gewichtskonstanz eingeengt. Es werden 138,93 g (95,16 % d. Th.) eines weißen Feststoffes gewonnen. Es wird ein Polymer aus Einheiten der Formel

$$O_{1/2}(CH_3)_2SiCH_2CH_2-\underset{\underset{ONa}{|}}{\overset{\overset{O}{\|}}{P}}-CH_2CH_2Si(CH_3)_2O_{1/2}$$

erhalten.

Beispiel 9:

15 g eines Siliconharzes aus $SiO_2$-Einheiten und Vinyldimethylsiloxaneinheiten der Viskosität 1460 $mm^2 \cdot s^{-1}$ bei Raumtemperatur und einem Vinylgehalt von 0,33 mol-Prozent werden mit 7,5 g (0,163 mol) Ethanol unter Stickstoffatmosphäre bei 80 °C vorgelegt. Dazu tropft man langsam unter Rühren eine Lösung aus 5,253 g (4,96 x $10^{-2}$ mol) Natriumhypophosphit, 2,8 g (0,15 mol) Wasser, 12,0 g (0,26 mol) Ethanol und 0,35 g (1,24 x $10^{-3}$ mol) 4,4'-Azobis-(4-cyanopentansäure) (10 Gew.-% in Wasser mit Natriumhydroxid auf pH 7 neutralisiert). Anschließend rührt man drei Stunden bei 80 °C unter Rückfluß. Die Lösung wird filtriert und im Hochvakuum bei 70 °C eingeengt. Die Trocknung erfolgt im Hochvakuum bei 100 °C über Phosphorpentoxid bis zur Gewichtskonstanz. Es werden 16,74 g (82,7 % d. Th.) eines weißen, kristallinen Harzes gewonnen. Es wird ein Harz aus SiO2-Einheiten, und Einheiten der Formel

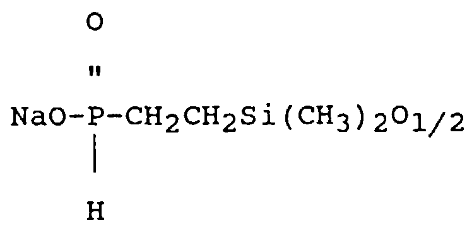

erhalten.

Beispiel 10:

8,17 g Produkt, wie in Beispiel 6 beschrieben, 34,93 g eines α,ω-Dihydroxylpolydimethylsiloxanes der Viskosität 45 $mm^2 \cdot s^{-1}$ mit 0,496 mol-Prozent an Si-gebundenen Hydroxylgruppen, 26,1 g (0,283 mol) Toluol und 12,9 mg (1,62 x 10-5 mol) Tetrabutylammoniumhydroxid * 30 Hydrat werden unter Stickstoffatmosphäre gemischt und 2 Stunden unter Rückfluß bei 120 °C gerührt. Dann werden nochmals 12,9 mg (1,62 x $10^{-5}$ mol) Tetrabutylammoniumhydroxid * 30 Hydrat zudosiert und weitere 2 Stunden bei 120 °C unter Rückfluß gerührt. Die Lösung wird filtriert und im Hochvakuum bei 100 °C bis zur Gewichtskonstanz eingeengt. Es werden 36,2 g (89,7 % d. Th.) eines transluzenten Öles als Equilibrat gewonnen.

Beispiel 11:

5,83 g (0,0313 mol) Divinyltetramethyldisiloxan und 2,34 g (0,051 mol) Ethanol werden unter Stickstoffatmosphäre auf 85 °C unter Rückfluß erhitzt. Dazu tropft man langsam unter Rühren eine Lösung aus 2,0 g (0,05 mol) Natriumhydroxid, 13,7 g (0,05 mol) phosphorige Säure (30 %ig in Wasser) und 4,3 g (0,0133 mol) 4,4'-Azobis-(4-cyanopentansäure) (10 Gew.-% in Wasser mit Natriumhydroxid auf pH 7 neutralisiert). Anschließend rührt man drei Stunden bei 85 °C unter Rückfluß. Die Lösung wird filtriert und im Hochvakuum bei 100 °C bis zur Gewichtskonstanz eingeengt. Es werden 5,93 (53,8 % d. Th.) eines weißen Feststoffes gewonnen. Es wird eine Verbindung der Formel

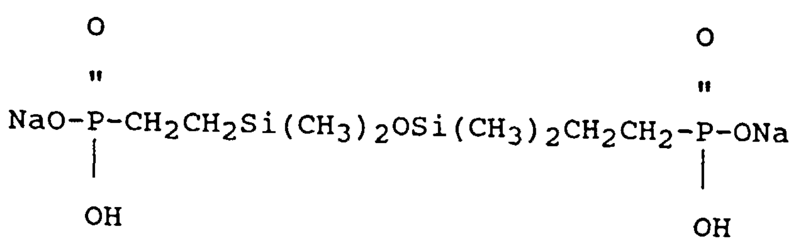

erhalten.

**Patentansprüche**

1. Phosphorhaltige Organosiliciumverbindungen mit Einheiten der Formel

$$\left[ M_fO-\overset{\overset{\displaystyle O}{\|}}{\underset{\underset{\displaystyle R^1}{|}}{P}}-Z \right]_a R_bSiX_cO_{\frac{4-(a+b+c)}{2}} \quad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
$R^1$ ein Wasserstoffatom, einen einwertigen Kohlenwasserstoffrest mit 1 bis 18 Kohlenstoffatom(en) je Rest oder einen Rest der Formel

$$-Z-SiR_bX_cO_{\frac{4-(a+b+c)}{2}}$$

bedeutet,

Z einen zweiwertigen Kohlenwasserstoffrest mit 2 bis 18 Kohlenstoffatomen je Rest bedeutet,
M ein Alkali- oder Erdalkalimetall ist,
X gleich oder verschieden ist, ein Halogenatom oder ein Rest der Formel $-OR^2$ ist,

wobei $R^2$ einen Alkylrest mit 1 bis 8 Kohlenstoffatom(en) je Rest, der durch ein Ethersauerstoffatom unterbrochen sein kann, bedeutet,

a 0, 1, 2, 3 oder 4,
b 0, 1, 2 oder 3,
c 0, 1, 2 oder 3,

die Summe $a+b+c \leq 4$ und
f 0,5 oder 1 ist.

2. Verfahren zur Herstellung von phosphorhaltigen Organosiliciumverbindungen, dadurch gekennzeichnet, daß Organosiliciumverbindungen (1) mit Einheiten der Formel

$$B_aR_bSiX_cO_{\frac{4-(a+b+c)}{2}} \quad (II),$$

wobei R gleich oder verschieden ist, einen einwertigen, gegebenenfalls halogenierten Kohlenwasserstoffrest mit 1 bis 18 Kohlenstoffatom(en) je Rest bedeutet,

B einen einwertigen, aliphatische Mehrfachbindungen aufweisenden Kohlenwasserstoffrest mit 2 bis 18 Kohlenstoffatomen je Rest bedeutet,
X gleich oder verschieden ist, ein Halogenatom oder ein Rest der Formel $-OR^2$ ist,

wobei $R^2$ einen Alkylrest mit 1 bis 8 Kohlenstoffatom(en) je Rest, der durch ein Ethersauerstoffatom unterbrochen sein kann, bedeutet,

a 0, 1, 2, 3 oder 4,
b 0, 1, 2 oder 3,
c 0, 1, 2 oder 3

und die Summe $a+b+c \leq 4$
ist,
mit Alkali- oder Erdalkalisalzen der Phosphin- oder Phosphonsäure (2) der Formel

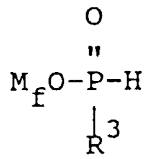 (III) ,

wobei $R^3$ ein Wasserstoffatom, eine Hydroxylgruppe, einen einwertigen Kohlenwasserstoffrest mit 1 bis 18 Kohlenstoffatom(en) je Rest,

M ein Alkali- oder Erdalkalimetall und
f 0,5 oder 1 ist,

in Gegenwart von freie Radikale bildenden Katalysatoren (3) umgesetzt werden.

**3.** Verfahren nach Anspruch 2, dadurch gekennzeichnet, daß die so erhaltenen phosphorhaltigen Organosiliciumverbindungen mit Säuren (4), die einen niedrigeren pK-Wert als die Phosphin- bzw. Phosphonsäure besitzen, umgesetzt werden.

**4.** Verfahren nach Anspruch 2, dadurch gekennzeichnet, daß die so erhaltenen phosphorhaltigen Organosiliciumverbindungen, die noch Si-gebundene, aliphatische Mehrfachbindungen aufweisende Gruppen enthalten, mit Organosiliciumverbindungen (5) mit mindestens einem Si-gebundenen Wasserstoffatom je Molekül in Gegenwart von die Anlagerung von Si-gebundenen Wasserstoff an aliphatische Mehrfachbindungen fördernde Katalysatoren (6) umgesetzt werden.

**5.** Verfahren nach Anspruch 2, 3 oder 4, dadurch gekennzeichnet, daß die so erhaltenen phosphorhaltigen Organosiliciumverbindungen mit Organopolysiloxanen (7) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

## Claims

**1.** Phosphorus-containing organosilicon compounds with units of the formula

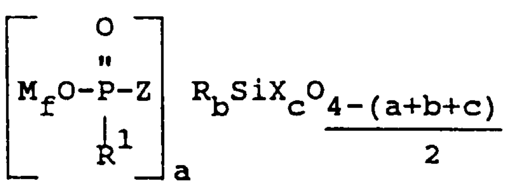 (I) ,

wherein R is identical or different and is a monovalent, optionally halogenated hydrocarbon radical having 1 to 18 carbon atoms per radical, $R^1$ is a hydrogen atom, a monovalent hydrocarbon radical having 1 to 18 carbon atoms per radical, or a radical of the formula

$$-Z-SiR_bX_cO_{\frac{4-(a+b+c)}{2}}$$

Z is a divalent hydrocarbon radical having 2 to 18 carbon atoms per radical,

M is an alkali metal or alkaline earth metal,
X is identical or different and is a halogen atom or a radical of the formula $-OR^2$,
$R^2$ being an alkyl radical having 1 to 8 carbon atoms per radical, which can be interrupted by an ether oxygen atom,
a is 0, 1, 2, 3 or 4,
b is 0, 1, 2 or 3,
c is 0, 1, 2 or 3,

the sum $a + b + c \leq 4$ and
f is 0.5 or 1.

**2.** Process for the preparation of phosphorus-containing organosilicon compounds, characterized in that organosilicon compounds (1) with units of the formula

$$B_aR_bSiX_cO_{\frac{4-(a+b+c)}{2}} \qquad (II),$$

wherein R is identical or different and is a monovalent, optionally halogenated hydrocarbon radical having 1 to 18 carbon atoms per radical,

B is a monovalent hydrocarbon radical having aliphatic multiple bonds and having 2 to 18 carbon atoms per radical,
X is identical or different and is a halogen atom or a radical of the formula $-OR^2$,
$R^2$ being an alkyl radical having 1 to 8 carbon atoms per radical, which can be interrupted by an ether oxygen atom,
a is 0, 1, 2, 3 or 4,
b is 0, 1, 2 or 3,
c is 0, 1, 2 or 3 and

the sum $a + b + c \leq 4$,
are reacted with alkali metal or alkaline earth metal salts of the phosphinic or phosphonic acid (2), of the formula

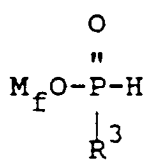
(III) ,

wherein $R^3$ is a hydrogen atom, a hydroxyl group or a monovalent hydrocarbon radical having 1 to 18 carbon atoms per radical,
M is an alkali metal or alkaline earth metal and f is 0.5 or 1,
in the presence of catalysts (3) which form free radicals.

**3.** Process according to Claim 2, characterized in that the resulting phosphorus-containing organosilicon compounds are reacted with acids (4) which have a lower pK than the phosphinic or phosphonic acid.

**4.** Process according to Claim 2, characterized in that the resulting phosphorus-containing organosilicon compounds which still contain Si-bonded groups having aliphatic multiple bonds are reacted with organosilicon compounds (5) having at least one Si-bonded hydrogen atom per molecule, in the presence of catalysts (6) which promote the addition of Si-bonded hydrogen onto aliphatic multiple bonds.

**5.** Process according to Claim 2, 3 or 4, characterized in that the resulting phosphorus-containing organosilicon compounds are equilibrated with organopolysiloxanes (7) selected from the group comprising linear organopolysiloxanes having terminal triorganosiloxy groups, linear organopolysiloxanes having terminal hydroxyl groups, cyclic organopolysiloxanes and copolymers of diorganosiloxane and monoorganosiloxane units.

## Revendications

1. Composés organosiliciés phosphorés renfermant des motifs de formule

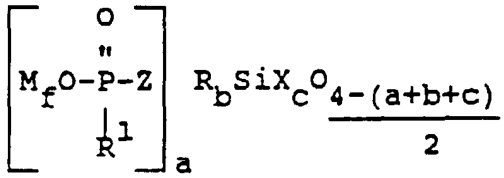 (I) ,

dans laquelle R est identique ou différent et représente un radical hydrocarboné monovalent éventuellement halogéné ayant de 1 à 18 atome(s) de carbone par radical,
$R^1$ représente un atome d'hydrogène, un radical hydrocarboné monovalent ayant de 1 à 18 atome(s) de carbone par radical ou un radical de formule

$$-Z-SiR_bX_cO_{\frac{4-(a+b+c)}{2}}$$

Z représente un radical hydrocarboné bivalent ayant de 2 à 18 atomes de carbone par radical,

M est un métal alcalin ou alcalino-terreux,
X est identique ou différent et représente un atome d'halogène ou un radical de formule $-OR^2$,

dans laquelle $R^2$ représente un radical alkyle ayant de 1 à 8 atome(s) de carbone par radical, lequel peut être interrompu par un atome d'oxygène d'éther,
a vaut 0, 1, 2, 3 ou 4,

b vaut 0, 1, 2 ou 3,
c vaut 0, 1, 2 ou 3,

la somme $a+b+c \leq 4$ et
f vaut 0,5 ou 1.

2. Procédé de préparation de composés organosiliciés phosphorés, caractérisé en ce que l'on fait réagir des composés organosiliciés (1) renfermant des motifs de formule

$$B_aR_bSiX_cO_{\frac{4-(a+b+c)}{2}} \quad (II),$$

dans laquelle R est identique ou différent et représente un radical hydrocarboné monovalent éventuellement halogéné ayant de 1 à 18 atome(s) de carbone par radical,

B représente un radical hydrocarboné monovalent renfermant des liaisons multiples aliphatiques, ayant de 2 à 18 atomes de carbone par radical,
X est identique ou différent, et représente un atome d'halogène ou un radical de formule $-OR^2$,

dans laquelle $R^2$ représente un radical alkyle ayant de 1 à 8 atome(s) de carbone par radical, lequel peut être interrompu par un atome d'oxygène d'éther,

a vaut 0, 1, 2, 3 ou 4,
b vaut 0, 1, 2 ou 3,

c vaut 0, 1, 2 ou 3,

et la somme a+b+c ≤ 4,
avec des sels de métaux alcalins ou alcalino-terreux de l'acide phosphinique ou phosphonique (2) de formule

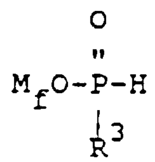

(III) ,

dans laquelle $R^3$ représente un atome d'hydrogène, un groupe hydroxy, un radical hydrocarboné monovalent ayant de 1 à 18 atome(s) de carbone par radical,
M est un métal alcalin ou alcalino-terreux et f vaut 0,5 ou 1,
en présence de catalyseurs (3) générant des radicaux libres.

**3.** Procédé selon la revendication 2, caractérisé en ce que les composés organosiliciés phosphorés ainsi obtenus sont mis à réagir avec des acides (4) présentant une valeur de pK plus faible que l'acide phosphinique ou phosphonique.

**4.** Procédé selon la revendication 2, caractérisé en ce que les composés organosiliciés phosphorés ainsi obtenus, qui comprennent également des groupes refermant des liaisons multiples aliphatiques liées au silicium, sont mis à réagir avec des composés organosiliciés (5) ayant au moins un atome d'hydrogène lié au silicium par molécule, en présence de catalyseurs (6) favorisant l'addition d'hydrogène lié au silicium sur des liaisons multiples aliphatiques.

**5.** Procédé selon la revendication 2, 3 ou 4, caractérisé en ce que les composés organosiliciés phosphorés ainsi obtenus sont équilibrés avec des organopolysiloxanes (7) choisis parmi le groupe constitué d'organopolysiloxanes linéaires renfermant des groupes triorganosiloxy terminaux, d'organopolysiloxanes linéaires renfermant des groupes hydroxy terminaux, d'organopolysiloxanes cycliques et de copolymères à base de motifs diorganosiloxane et mono-organosiloxane.